# EUROPEAN PATENT APPLICATION

(11) **EP 2 134 139 A2**
(43) Date of publication of application: **16.12.2009**
(21) Application number: 09155864.3
(22) Date of filing: 23.03.2009
(51) Int. Cl.: H04W 88/08

(54) **Base station, user equipment and set-up method**

(30) Priority: 13.06.2008 JP 2008156010
(71) Applicant: Fujitsu Limited, Kawasaki-shi, Kanagawa 211-8588 (JP)
(72) Inventor: Nitta, Daisuke, Kawasaki-shi, Kanagawa 211-8588 (JP); Tomita, Tetsuo, Kawasaki-shi Kanagawa 211-8588 (JP)
(74) Representative: Fenlon, Christine Lesley

(57) **Abstract**

A base station according to an embodiment may include a wireless function unit to wirelessly communicate with a user equipment; a transmission/reception unit to wirelessly communicate with the user equipment; and a control unit to receive set-up data from the user equipment via the transmission/reception unit to set up the wireless function unit.

## Description

### FIELD

The present invention is relates to a base station in a cellular phone communication network.
The application of the present invention may include a super-small base station, user equipment, and a method of setting up a super-small base station.

### BACKGROUND

A cellular phone communication network may include a so-called macro-cell base station (BS) which serves a coverage area of radius from hundreds meters to tens kilo-meters. The network may also include a so-called nano-cell (or pico-cell) BS which serves a smaller coverage area than that of the macro-cell BS. The nano-cell BS is used to serve boundary area between two macro-cells, area within a building, and/or underground area, into which electromagnetic waves are difficult to propagate into.

A femto-cell (super-small) BS (hereinafter, may be also referred to as SSBS) is a base station for home or office use with coverage area of radius of tens meter. The use of the femto-cell BS is still under restrictions imposed by the governmental agencies, and requires a license from the Ministry of Internal Affairs and Communications. The femto-cell (super-small) BS is expected to be used for personal use, thus needs to be set up and operated easily. In this regard, early legislative arrangements are expected. After such legislative arrangements, the personal use of a femto-cell would be permitted subject to the following:
(1) the registration of a user name and a set-up location to a carrier upon purchase;
(2) the notification of the set-up location to the carrier (for the carrier to confirm that the femto-cell is set-up as registered);
(3) the authentication of the femto-cell set up for the carrier to confirm its authenticity; and
(4) the measurement of surrounding condition of electromagnetic waves and its notification to the carrier (the carrier to return various parameters such as frequencies to be used).

A technique is known in the art in which spread codes are autonomously assigned. A base station acquires its positional information by means of GPS (Global Positioning System) to inform the information to a base station control apparatus via an IP network. Then, the base station control apparatus identifies a useable spread code based on pre-stored spread codes and the positional information, and inform the base station of the identified spread code.
[Patent Document 1] JP 2006-324831
[Patent Document 2] JP 2007-266785

### SUMMARY

Accordingly, it is a general object of the present invention to provide a novel and useful wireless communication in which one or more of the problems described above are eliminated.

Another and more specific object of the present invention is to provide a base station which can be easily set up, a user equipment for use in the setting up of the base station, and a method of setting up a base station.

According to an embodiment, a base station may include:
a wireless function unit to wirelessly communicate with a user equipment;
a transmission/reception unit to wirelessly communicate with the user equipment; and
a control unit to receive set-up data from the user equipment via the transmission/reception unit to set up the wireless function unit.

According to another embodiment, user equipment includes:
a wireless function unit to wirelessly communicate with a carrier apparatus;
a wireless transmission/reception unit to wirelessly communicate with a base station;
a control unit to transmit a set-up request of the base station to the carrier apparatus via the wireless function unit, receive set-up values and carrier authentication information for the base station from the carrier apparatus via the wireless function unit, and transmit the received set-up value and carrier authentication information to the base station via the wireless transmission/reception unit.

According to yet another embodiment, a method of setting up a base station, the method may include:
transmitting by a user equipment a request for setting up a base station including identification of the base station, to a carrier apparatus;
generating by the carrier apparatus a set-up value and carrier authentication information based on the identification to transmit the generated set-up value and carrier authentication information to the user equipment; and
transmitting by the user equipment the set-up value and carrier authentication information to the base station.

### BRIEF DESCRIPTION OF DRAWINGS

Fig. 1 is a schematic diagram for explaining the method of setting up a typical super-small base station;
Fig. 2 is a schematic diagram for explaining the setting up system for a super-small base station according to an embodiment;
Fig. 3 depicts a sequence of operations at various components of the system depicted in Fig. 2;
Fig. 4 illustrates an exemplary data format of the registration information to be transmitted;
Fig. 5 illustrates an exemplary data format of the super-small base station database of the carrier apparatus;
Fig. 6 illustrates an exemplary data format of the access point database;
Fig. 7 illustrates an exemplary data format of "information to be written;"
Fig. 8 depicts a sequence of operations at various components of the system depicted in Fig. 2, which continues from Fig. 3;
Fig. 9 illustrates an exemplary command used for the authentication request;
Fig. 10 illustrates an exemplary screen which is displayed on the user interface unit of the UE when the authentication is performed;
Fig. 11 illustrates an exemplary screen showing the result of the authentication;
Fig. 12 illustrates an exemplary data format of the transmission request;
Fig. 13 illustrates an exemplary data format of the positional information;
Fig. 14 illustrates an exemplary data format of radio condition;
Fig. 15 depicts a sequence of operations at various components of the system depicted in Fig. 2, which continues from Fig. 8;
Fig. 16 illustrates an exemplary data format of the set-up request;
Fig. 17 illustrates an exemplary data format of set-up value;
Fig. 18 illustrates an example of carrier authentication information;
Fig. 19 illustrates an exemplary command to be transmitted; and
Fig. 20 depicts a sequence of operations at various components of the system depicted in Fig. 2, which continues from Fig. 15.

### DESCRIPTION OF EMBODIMENTS

Embodiments of the present invention are described in detail with reference to the accompanied drawings. Similar components have the same reference numerals.

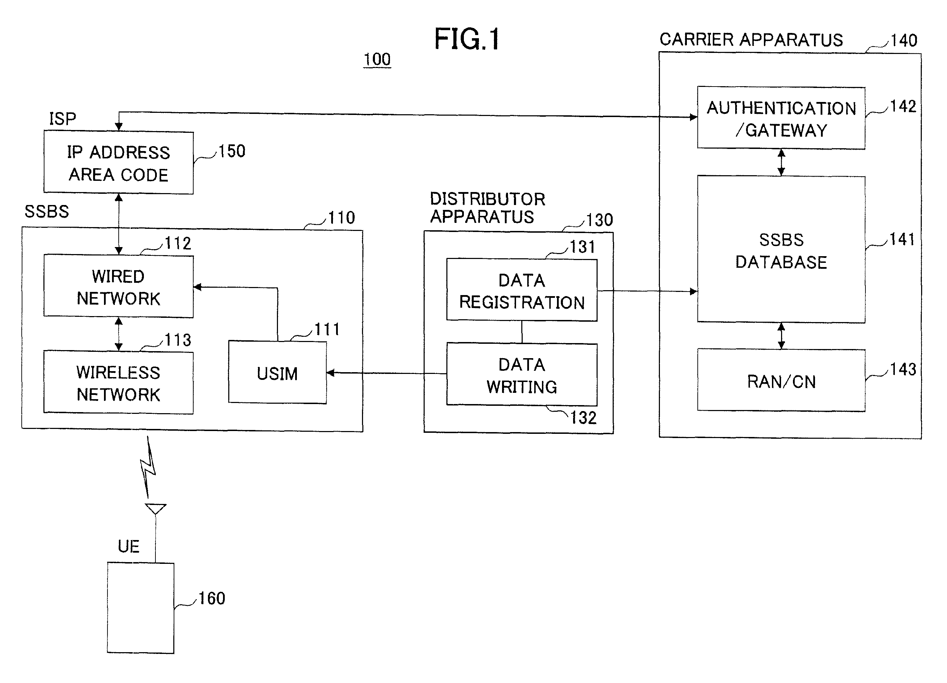

A description is made of a method of setting up a base station with reference to a super-small base station (hereinafter, referred to as SSBS) described above. It would be appreciated that the method is also applicable to other types of base stations. Fig. 1 is a schematic diagram for explaining the method of setting up a typical SSBS. Fig. 1 depicts an arrangement 100 including a SSBS apparatus 110, a retailer apparatus 130, a carrier apparatus 140, an Internet service provider (ISP) system 150, and a user equipment(UE) 160.

A distributor sells a SSBS apparatus and uses a data registration unit 131 of the retailer apparatus 130 to register the user's (administrator's) name and relevant data such as the address of set-up location (registration data) into a super-small base station database (SSBS database) 141 of the carrier apparatus 140.

In addition, the retailer inserts a USIM card (IC card) 111 into the SSBS 110, the USIM card containing the registration data and authenticator information.

After installing and powering on the SSBS 110, the user is required to access an authentication server 142 of the carrier apparatus 140 via the ISP system 150 for authentication based on the authenticator information contained in the USIM card 111. In response, the carrier apparatus 140 determines the address of the set-up location of the SSBS apparatus 110 by checking the IP address and/or area code of the SSBS apparatus 110.

The carrier apparatus 140 makes a determination of whether the set-up address matches the address included in the registration data registered into the database 141, and then causes a radio network unit 113 of the SSBS apparatus 110 to measure the surrounding condition of electromagnetic wave of the SSBS apparatus 110. The carrier apparatus 140 computes parameters (set-up values) to be set in the SSBS 110 based on the measured condition of electromagnetic waves and the set-up location information, and inform a RAN/CN apparatus 143 and the SSBS apparatus 110 of the computed set-up values to be applied.

After the application of the set-up values, the SSBS 110 becomes available for communication with the user equipment 160.

However, the method of setting up SSBS described above suffers the following problems.

Firstly, the positional information may not be accurate enough. The positional information is acquired based on the IP address of the base station and/or the area code of the ISP, and therefore the precise determination of set-up location may be difficult. Disguise of IP addresses may be possible by means of the use of switches and/or routers. The SSBS apparatus may be used at a distant location far from the registered address, the detection of which by the carrier is difficult if not impossible.

Secondly, the user (administrator) is not required to pass authentication. In the method described above, the authentication is performed between the carrier apparatus 140 and the SSBS 110, which does not necessarily assure that the SSBS 110 is set up by the user (administrator) by himself. Even though the SSBS is set up at a right location as registered, it may be relocated at a different location, the detection of which may be impossible. In conjunction with the disguise, the SSBS may be set up at any location. If a certain mechanism for user authentication is to be built in the SSBS, such mechanism requires additional hardware and/or user interface in the SSBS. If the authentication is performed via a network, a personal computer, for example, may be necessary for the control of authentication process.

Thirdly, a certain mechanism for measuring electromagnetic waves may need to be built in the SSBS. The SSBS may need to be equipped with components/functionality to measure the surrounding electromagnetic waves. Such additional components/functionality may increase the R&D and production cost of the SSBS.

According to an embodiment, the GPS functionality built in the user equipment may be used for acquiring precise positional information in order to solve the first problem of the positional information not being precise enough.

According to another embodiment, in order to solve the second problem of the lack of authentication of the user, the authentication mechanism such as password and/or bio metrics authentication built in the user equipment may be used for authentication of the user (administrator) of the SSBS. In this case, authentication hardware and user interface built in the user equipment are available, it is not necessary to add such hardware and user interface to the SSBS. The user also does not need to user his/her personal computer for authentication process via the network.

In addition, according to yet another embodiment, functionality for measuring electromagnetic waves built in the user equipment may be used to measure the electromagnetic wave condition around the SSBS in order to solve the third problem of the necessity of such functionality in the SSBS.

As described above, according to embodiments, various functionalities built in the user terminal may be used on behalf of corresponding functionalities required for the SSBS in dependence on application, for reducing the R&D and production costs of the SSBS. Thus, according to an embodiment, the SSBS apparatus may be provided with a short-range communication unit to interface with the user equipment. The short-range communication unit enables communication between the SSBS apparatus and the user equipment even before the completion of setting up of the SSBS. In the context of this disclosure, the short-range communication unit means any communication unit such as RFID, blue-tooth (trade mark), IrDA, and ZigBee (IEEE 802.15.4), with limited coverage area, and therefore the use of the short-range communication unit does not require any license from the Ministry of Internal Affairs and Communication, the Japanese authority in charge of licensing of the use of communication equipment.

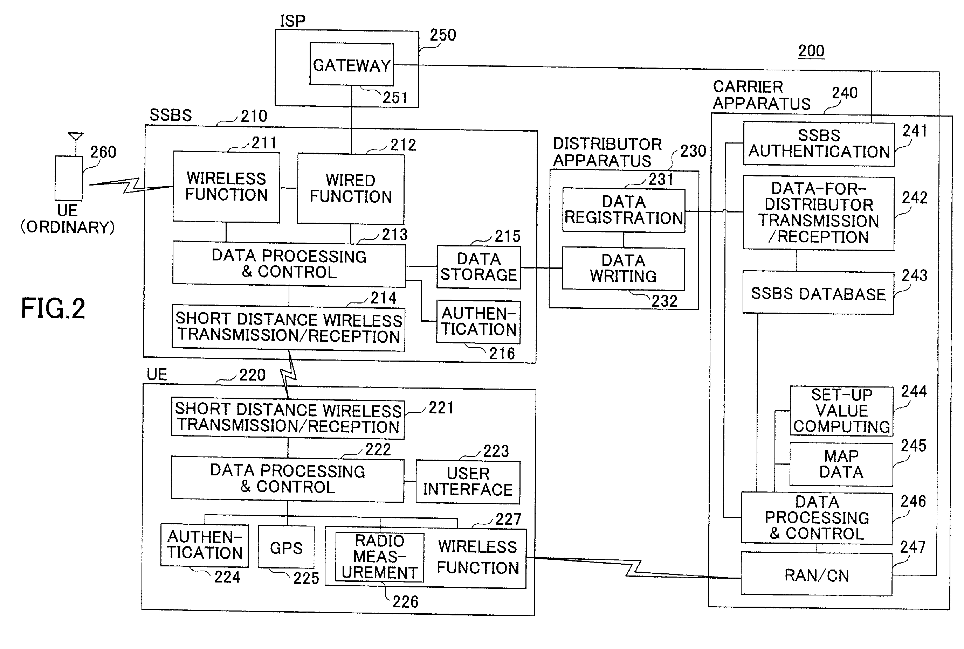

Embodiments of a SSBS, a method of setting up the SSBS apparatus, and user equipment that can be used for the setting up of the SSBS apparatus are described below in detail. Fig. 2 is a schematic diagram for explaining the setting up system for a SSBS according to an embodiment. The setting up system 200 for a SSBS depicted in Fig. 2 includes a SSBS 210, user equipment (UE) 220 for setting up the BS 210, a distributor apparatus 230, a carrier apparatus 240, an Internet Service Provider apparatus 250, and a general user terminal (UE) 260 which is not necessarily for setting up the BS 210).

### 1. Operation upon the sales of a SSBS

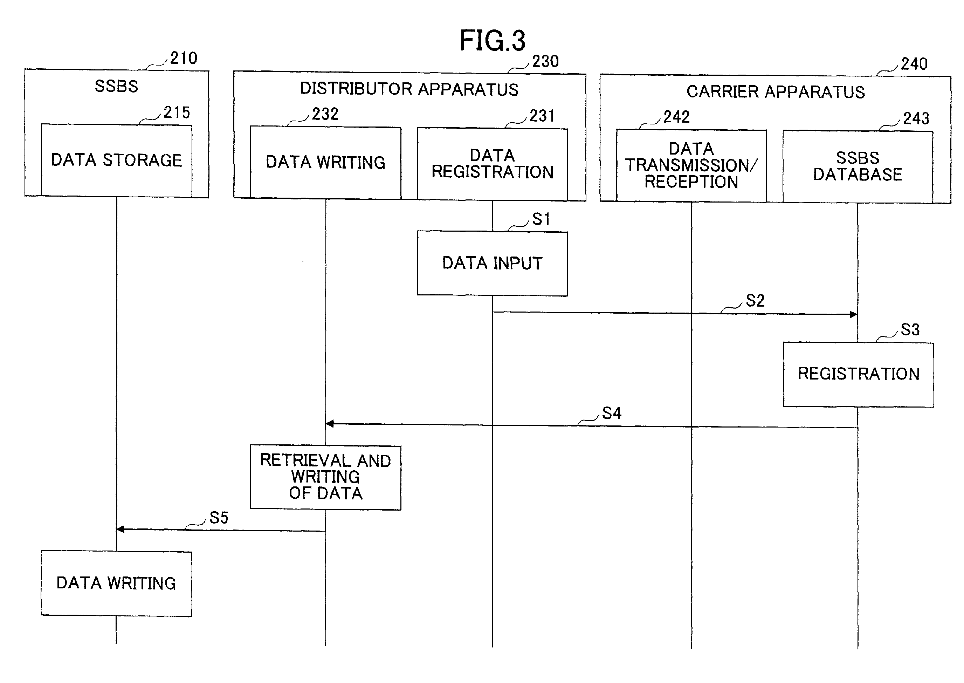

Fig. 3 depicts a sequence of operations at various components of the system 200 depicted in Fig. 2.

An operator of the distributor (seller) of the BS 210 inputs, to a data registration unit 231 of the distributor apparatus 230, various information such as the name of a user (administrator) of the BS 210 to be sold, address of a location to which the BS is to be set up, and authentication information such as a password and a biometrics authentication data (the name of the user, address of the location, and the authentication information may be collectively referred to as "registration information") (step S1). The input information is transmitted from the data registration unit 231 to a distributor data transmission/reception unit 242 of the carrier apparatus 240 (step S2), and stored in a SSBS database 243 (step S3).

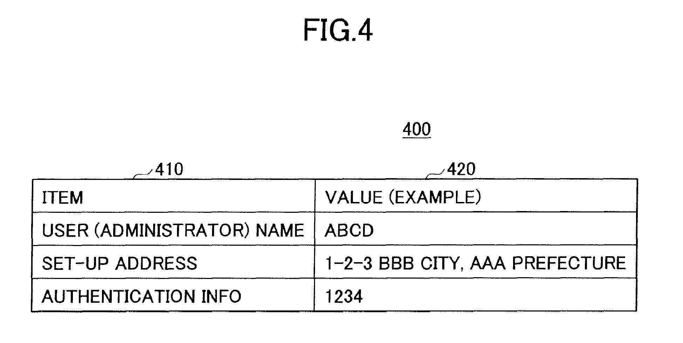

The data format of the registration information to be transmitted is depicted in Fig. 4. As depicted in Fig. 4, the data format 400 of the registration information includes two columns, namely items 410 and its values 420. The items 410 may include fields for the name of the user (administrator of the SSBS), the address of the location at which the BS is to be set up, and the authentication information. The fields have exemplary values, "ABCD," "1-2-3 BBB city CCC prefecture," and "1234," respectively. According to the embodiment, a password is used as the authentication information. According to another embodiment, biometrics information such as fingerprints may be used as the authentication information.

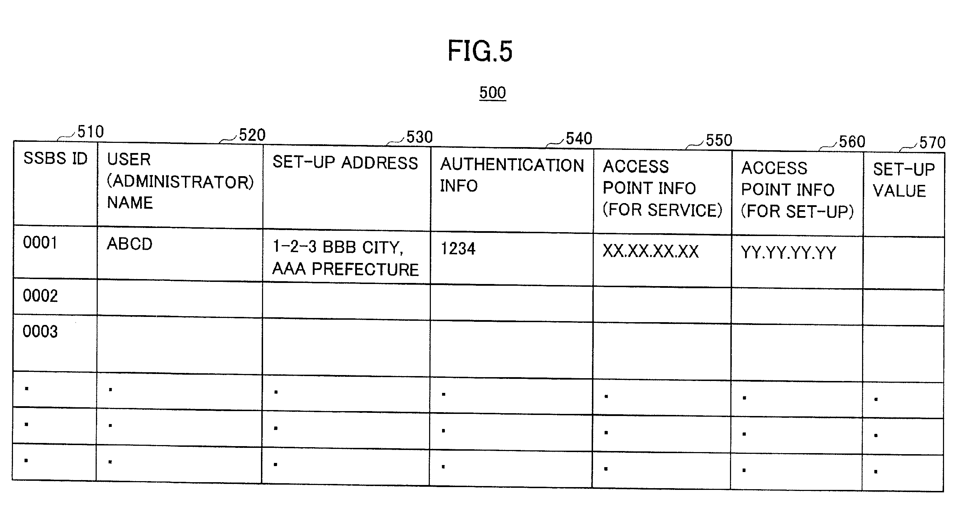

Fig. 5 illustrates an exemplary data format of the SSBS database 243 of the carrier apparatus 240. The data format 500 illustrated in Fig. 5 includes a super-small base station ID (SSBS ID) 510, the user (administrator) name 520, the address of set-up location 530, the authentication information 540, the access point information (for services) 550, access point information (for set-up) 560, and set-up values 570. It is seen from Fig. 5 that a SSBS ID "0001" has the following values: "ABCD" as the user name; "1-2-3 BBB city, AAA prefecture" as the set-up location; "1234" as the authentication information; "XX.XX.XX.XX" as the access point information (for services); and "YY.YY.YY.YY" as the access point information (for set-up). The SSBS ID 510 is identification information (ID) which is unique to each SSBS apparatus. The SSBS ID is used for searching any information in the SSBS database. According to the embodiment, serial numbers are assigned to each base station in the order of their entries. According to another embodiment, the identification information may be assigned to in different manners. The user (administrator) name 520, the set-up location address 530, and the authentication information 540 correspond to the registration information transmitted from the distributor apparatus 230. The access point information (for services) 550 is the information of an access point (IP address and port number, for example) through which the SSBS 210 establishes a connection with the carrier apparatus 240 via the ISP 250 after the set-up of the SSBS 210. The access point information (for set-up) 560 is information on a access point (IP address and port number, for example) for setting up the SSBS 210 using the UE 220. As will be described in detail below, the set-up value computed by a set-up value computation unit 244 of the carrier apparatus 240 is stored in the set-up value field 570 . It is noted that no entry has been made to the set-up value field 570 immediately after the initial registration of the SSBS 210.

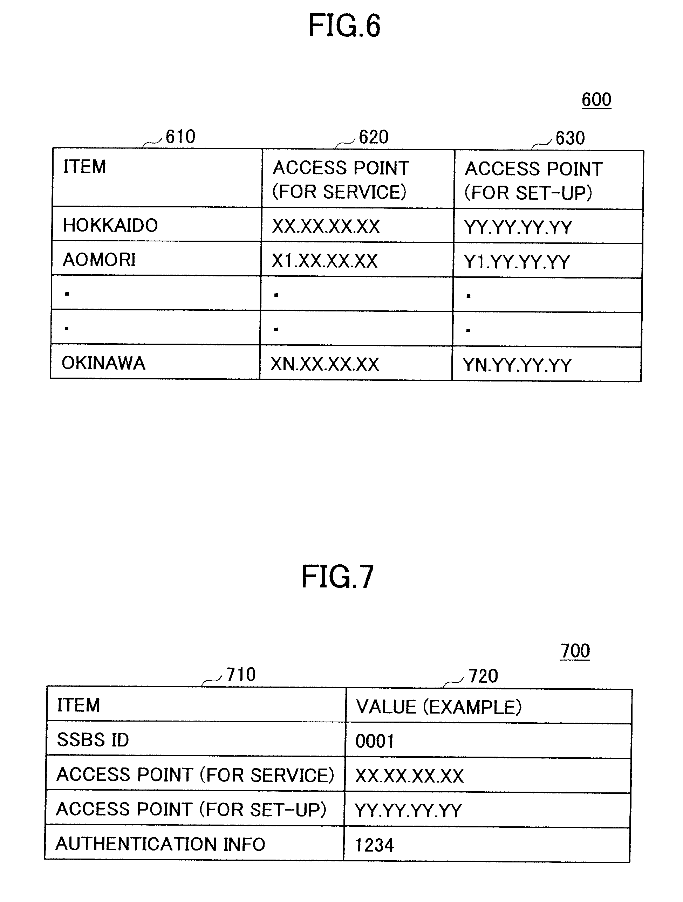

The same access point may be used both for receiving services and for set-up. Multiple SSBS may share the same access point. Different access points may be used in dependence on geographical areas such as prefectures, states, or cities, where the SSBS is to be set up. In the case of sharing the same access point by multiple SSBS, the information (value) of the same access point may be entered in the database before the information related to the multiple SSBS is entered. In the case of using different access points in dependence on the geographical areas, the information of the different access points may be selected from an access point database (not illustrated) upon the entry of the set-up address of the SSBS and entered into the SSBS database 243. An exemplary data format of the access point database (not illustrated in Fig. 2) is depicted in Fig. 6. The data format depicted in Fig. 6 includes item (prefectures in this case) 610, access point information 620 (for receiving services), and access point information 630 (for set-up).

Upon completion of the registration (entry) of the registration information at the carrier apparatus 240, SSBS ID, access points, and the authentication information (collectively referred to as "information to be written") are transmitted from the SSBS database 243 of the carrier apparatus 240 to a data writing unit 232 of the distributor apparatus 230 via the data transmission/reception unit 242 and the data registration unit 231 (step S4). The data writing unit 232 of the distributor apparatus 230 writes the "information to be written" to the data storage unit 215 of the SSBS 210. In the embodiment, the data writing unit 232 may write the "information to be written" directly to the data storage unit 215 of the SSBS 210. According to another embodiment, the data writing unit 232 may write the "information to be written" into a storage medium such as a USIM card, which may be to be inserted into a storage medium insertion unit (not illustrated) of the SSBS 210. In this case, the storage medium and the storage medium insertion unit collectively correspond to the data storage unit 215. Exemplary "information to be written" is illustrated in Fig. 7. The information 700 illustrated in Fig. 7 includes item field 710 and value field 720. The item field 710 includes the SSBS ID, access point (for receiving services), access point (for set-up), and authentication information, each having corresponding value as depicted in Fig. 5. For simplicity, the authentication information is assumed to be a password. In another embodiment, the authentication information may be biometrics data such as fingerprints.

### 2. Operation upon power-on of the SSBS

The user (administrator) places the SSBS 210 at a location where he/she desires to set up the SSBS 210 and power it on. Upon powering on the SSBS 210, its activation sequence starts operating and a short distance wireless transmission/reception unit 214 wakes up, which allows the SSBS 210 to communicate with another wireless communication apparatus such as UT 260 via short distance wireless communication.

It is noted that the short distance wireless communication is a wireless communication scheme, the coverage area of which is shorter than that of the SSBS 210, and therefore the use of the short distance wireless communication does not require the license or permission of any governmental authority. The short distance wireless communication temporarily allows the SSBS 210 and the UT 220 to communicate each other for the set-up of the SSBS 210. An example of the short distance wireless communication may include wireless communication scheme such as Radio Frequency Identification (RFID) and Bluetooth (trade mark). In the embodiment, radio communication such as RFID and Bluetooth may be used. According to another embodiment, optical communication such as Infrared Data Association (IrDA) and/or wired communication such as Universal Serial Bus (USB) may be used.

### 3. Authentication between UE and SSBS, and measurement of location and radio condition at UE

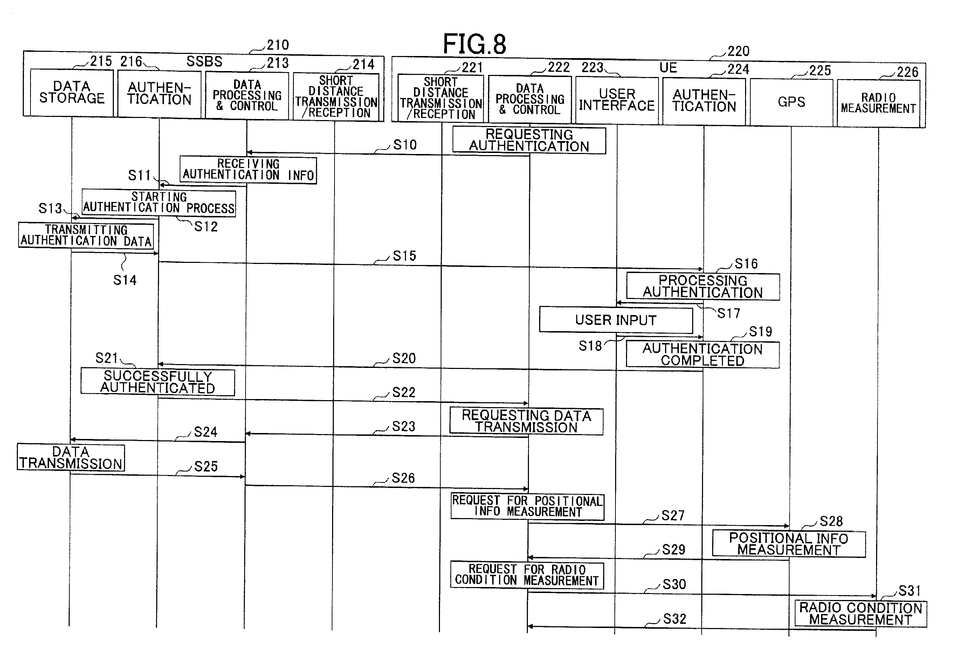

Fig. 8 depicts a sequence of operations at various components of the system 200 depicted in Fig. 2, which continues from Fig. 3.

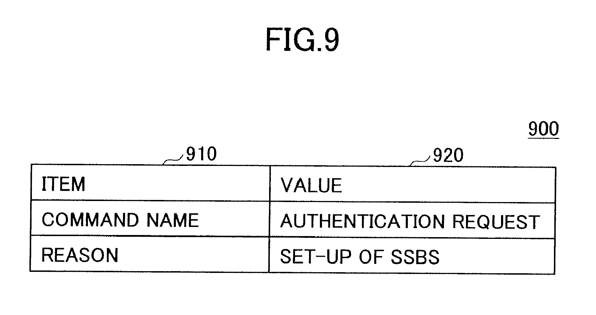

A data processing & control unit 222 of the UT 220 requests authentication of the UT 220 to the data processing & control unit 213 of the SSBS 210 via the short distance transmission/reception units 221 and 214 (step S10). Fig. 9 illustrates an exemplary command used for the authentication request. As depicted in Fig. 9, the data format 900 of the authentication request command includes two columns, namely item 910 and its value 920. The item field 910 includes "command name" and "reason" for the authentication request. In this case, their values are "AUTHENTICATION REQUEST" and "SET-UP OF SSBS."

In response to the authentication request, the data processing & control unit 213 of the SSBS 210 instruct the authentication unit 216 (step S11). The authentication unit 216 starts the authentication process (step S12) and retrieves the authentication information from the data storage unit 215 (steps S13-14). The authentication unit 216 sends the authentication information retrieved from the data storage unit 215 to the authentication unit 224 of the UE 220 and instructs the authentication (step S15). In response to the instruction from the authentication unit 216, the authentication unit 224 of the UE 220 starts the authentication of the user (step S16). The authentication unit 224 can obtain the authentication information such as a password and biometrics data of the user (administrator) via the user interface unit 223 (steps S17-18).

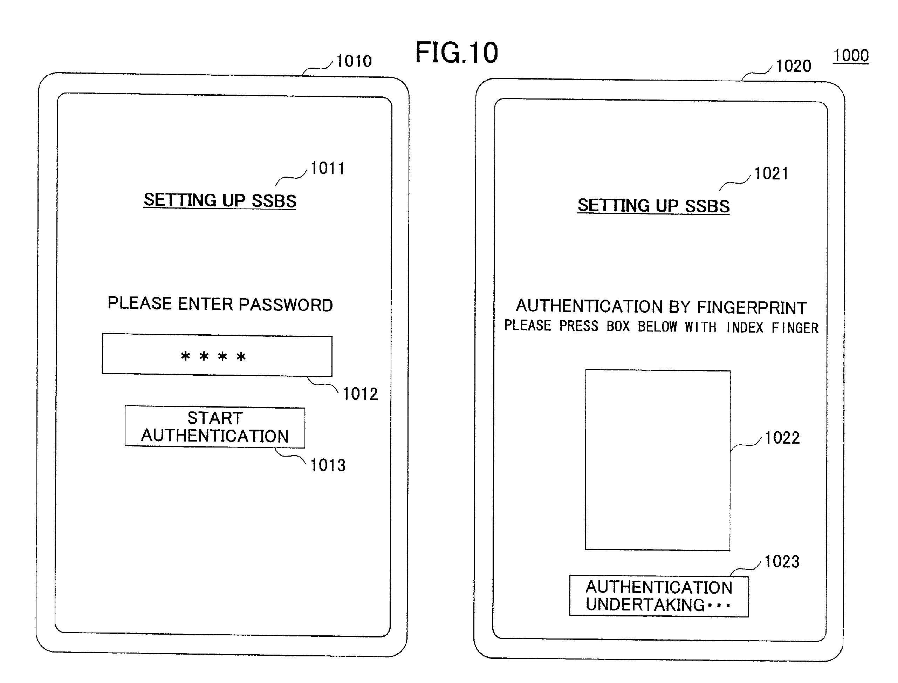

Fig. 10 illustrates an exemplary screen which is displayed on the user interface unit of the UE 220 when the authentication is performed. As illustrated in Fig. 10, the screen 1010 indicates a message 1011, "SETTING UP SUPER-SMALL BASE STATION PLEASE ENTER YOUR PASSWORD," a box 1012 indicating the entered password as "****," and a button 1013 for starting authentication. In an embodiment where biometrics authentication is used, an exemplary screen 1020 may be displayed indicating a message 1021, "SETTING UP SUPER-SMALL BASE STATION FINGER PRINT AUTHENTICATION PLEASE PRESS BOX BELOW WITH INDEX FINGER," a box 1022 to be pressed with an index finger, and a message 1023 indicating that the authentication is undertaken in response to the pressing.

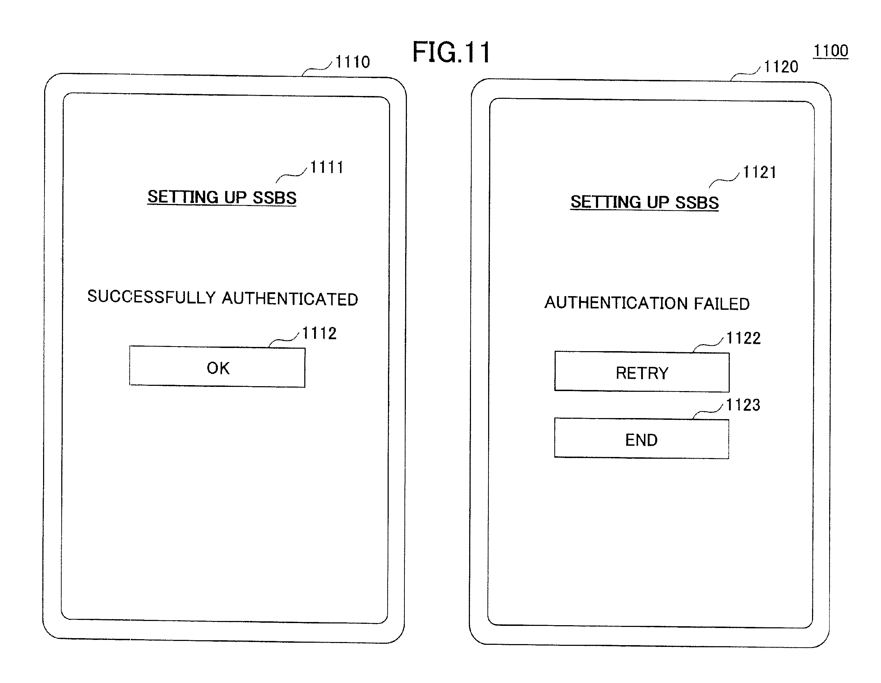

An exemplary screen showing the result of the authentication is depicted in Fig. 11. When the authentication is successfully completed, a screen 1110 may be displayed indicating a message, "SETTING UP SUPER-SMALL BASE STATION (SSBS) AUTHENTICATION SUCCESSFULLY COMPLETED," together with a bottom 1112 for acknowledging the message. If the authentication fails, an exemplary screen 1120 may be displayed indicating a message "SETTING UP SUPER-SMALL BASE STATION (SSBS) AUTHENTICATION FAILED," together with a bottom 1120 for requesting an authentication again and a bottom 1123 for ending the authentication process.

When the user authentication is successfully completed, the authentication unit 224 of the UE 220 informs the authentication unit 216 of the SSBS 210 (step S20). In response to the information from the authentication unit 224, the authentication unit 216 acknowledges the successful authentication (step S21) and informs the data processing & control unit 222 of the successful authentication (step S22).

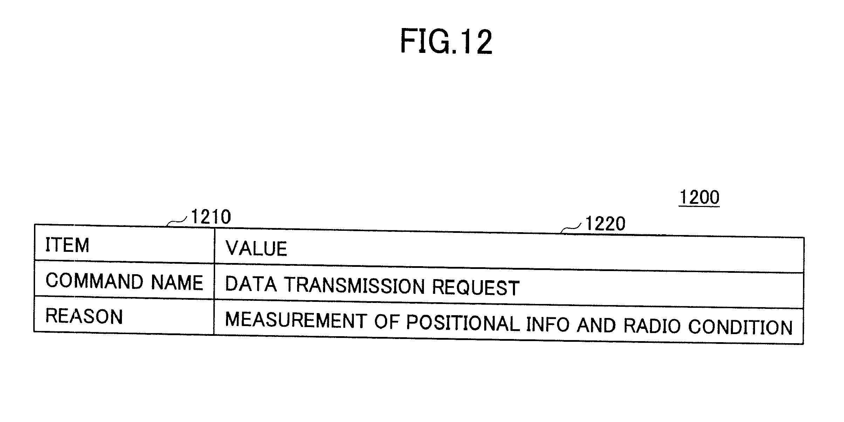

After the completion of the authentication between the SSBS 210 and UE 220, the data processing $ control unit 222 of the UE 220 request the data processing & control unit 213 of the SSBS 210 to transmit the SSBS ID, access point information, and authentication information (that is, "information to be written") written in the data storage unit 215 (step S23). An exemplary data format of the transmission request is depicted in Fig. 12. The data format 1200 depicted in Fig. 12 includes item field 1210 including command name and the reason of the request. The data format 1200 also includes a value field 1220 including "request for data transmission" and "measurement of location and radio wave." The data processing & control unit 213 of the SSBS 210 retrieves the written information ("information to be written" stored in the data storage unit 215), and transmit it to the data processing & control unit 222 (step S26). Exemplary information transmitted in this step is illustrated in Fig. 7.

It would be appreciated that the SSBS 210 and UE 220 communicates using the short distance wireless communication technique via the short distance wireless transmission/reception unit 214 and the short distance wireless transmission/reception unit 221.

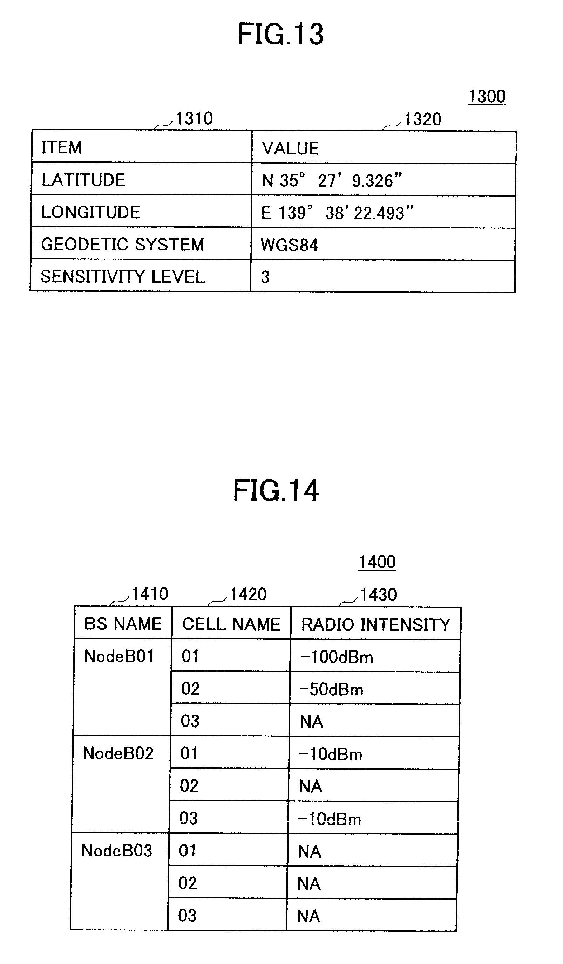

Meanwhile, the data processing & control unit 222 of UE 220 requests the GPS unit 225 to measure GPS data (positional information) (step S27). The GPS unit 225 measures the positional information (step S28) and sends the positional information back to the data processing & control unit 222 (step S29). An example of positional information is illustrated in Fig. 13. The positional information 1300 illustrated in Fig. 13 includes item field 1310 and corresponding value field 1320. The item field 1310 includes latitude, longitude, measuring geodetic system, and sensitivity level. The value field 1320 includes "N 35°27' 9.326"", E 139°38'22.493", "WGS84," and "3," respectively. The latitude is a measured value of latitude. The longitude is the measured value of longitude. The geodetic system indicates a geodetic system used for the measurement. WGS84 is an example of geodetic system used for Global Positioning System (GPS). The sensitivity level indicates the sensitivity of measurement by means of 5 steps, for example.

The data processing & control unit 222 requests a radio measurement unit 226 to acquire surrounding radio condition (information on surrounding cells) (steps S30-32). An example of radio condition is illustrated in Fig. 14. The radio condition illustrated in Fig. 14 includes base station name field 1410, cell name field 1420, and radio intensity field 1430. The illustrated example indicates a cell "01" of BS "NodeB 01" has a radio intensity value of "-100 dBm."

A different method for measurement of radio condition may be used for different communication system. For example, for W-CDMA system, the surrounding cell information is sent from a radio network controller (RNC) of the RAN apparatus. The UE measures the radio condition with reference to the surrounding cell information.

### 4. Operation of carrier apparatus to compute set-up value required for SSBS

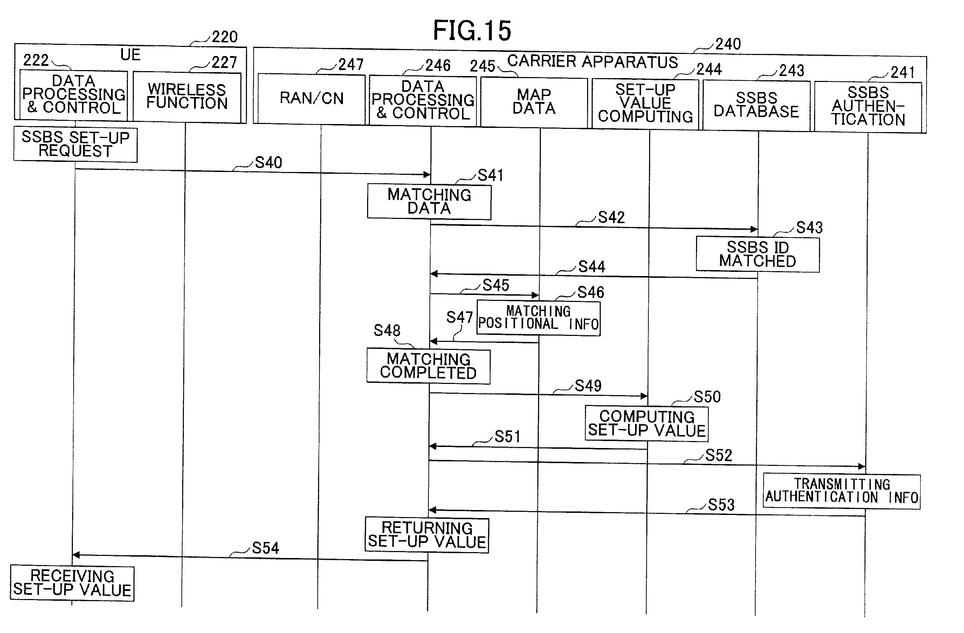

Fig. 15 depicts a sequence of operations at various components of the system 200 depicted in Fig. 2, which continues from Fig. 8.

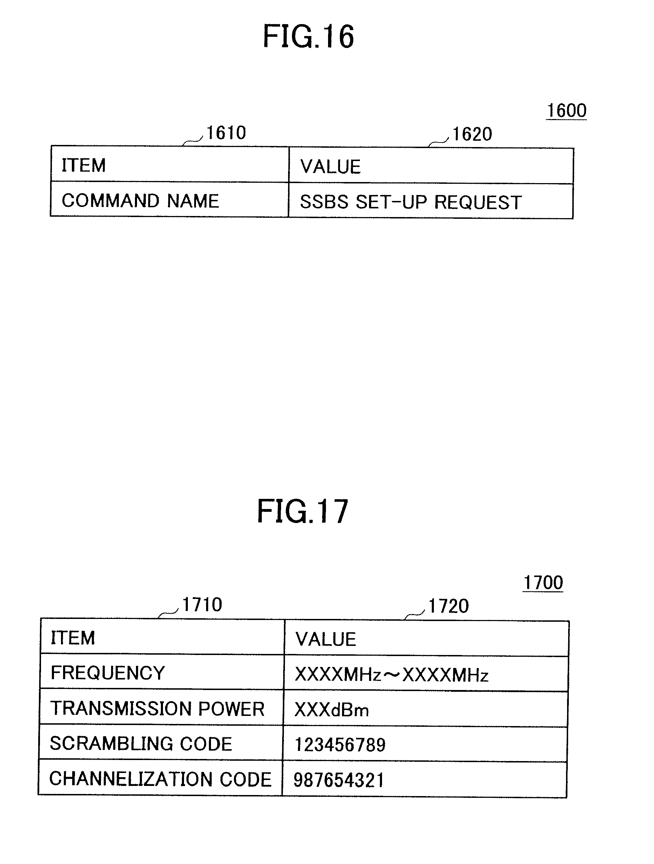

The UE 220 is connected to the carrier apparatus 240 and requests the set-up of the SSBS 210. In particular, the data processing & control unit 222 of the UE 220 connects itself to the carrier apparatus 240 via the wireless function unit 227 based on the access point information (for set-up) received from the SSBS 210, and requests for the set-up of the SSBS 210 (step S40). The data processing & control unit 222 transmits, to the data processing & control unit 246 of the carrier apparatus 240, the written information ("information to be written") received from the SSBS 210, the positional information acquired by the GPS unit 225, and the surrounding cell information acquired by the radio measurement unit 226. An exemplary data format of the set-up request is depicted in Fig. 16. The data format 1600 illustrated in Fig. 16 includes item field 1610 and value field 1620, each including command name and "SSBS set-up request."

In the carrier apparatus 240, a data processing & control unit 246 determines whether the SSBS 210 requesting the set-up is registered in the SSBS database unit 243 (steps S41-44). In addition, the data processing & control unit 246 transmits the GPS data (latitude/longitude) as positional information to a map data unit 245, searches an address corresponding to the positional information, and determine whether the searched address matches the address registered in the SSBS database unit 243 (steps S45-47). The searching of address corresponding to the GPS data may involve map data that maintains latitude/longitude and address correspondingly. The matching of the searched address with the registered address may take into account the measurement error of GPS, allowing some tolerance, say +/- 10m. In another embodiment, the tolerance may depend on the sensitivity level of the measurement.

In the case of unsuccessful matching of the search address with the registered address, the data processing & control unit 246 may inform the UE 220 of the unsuccessful matching (not shown).

In case of successful matching of the search address with the registered address (step S48), the data processing & control unit 246 sends, to the set-up value computing unit 244, the positional information and surrounding cell information (that is, GPS data and radio condition) received from the UE 220 (step S49) to compute the set-up values for the SSBS (step S50). An example of the set-up values may include frequency, transmission power, scrambling code, and channelization code. The set-up value computing unit 244 computes and sends the set-up value back to the data processing & control unit 246 (step S51).

The computing of set-up value may involve the determination of unused frequency/scrambling code/channelization code around the SSBS with reference to map data in which the current set-up location of SSBS and its latitude/longitude can be correlated each other, then the determination of frequency used in the cell and the radio condition surrounding the cell, and finally the determination of radio transmission power for the SSBS. The determined set-up value may update the map data of the set-up computing unit 444. An example of set-up value is illustrated in Fig. 17. The set-up value 1700 illustrated in Fig. 17 may include item field 1710 and value field 1720. The item field 1710 may include frequency, transmission power, scrambling code, and channelization code, and the value field 1720 includes their values. In the embodiment which assumes the use of W-CDMA system, parameters required for such a W-CDMA system, in particular, the scrambling code and channelization code, are set up. In another embodiment using a different communication system, different parameters suitable to the different communication system may be set up.

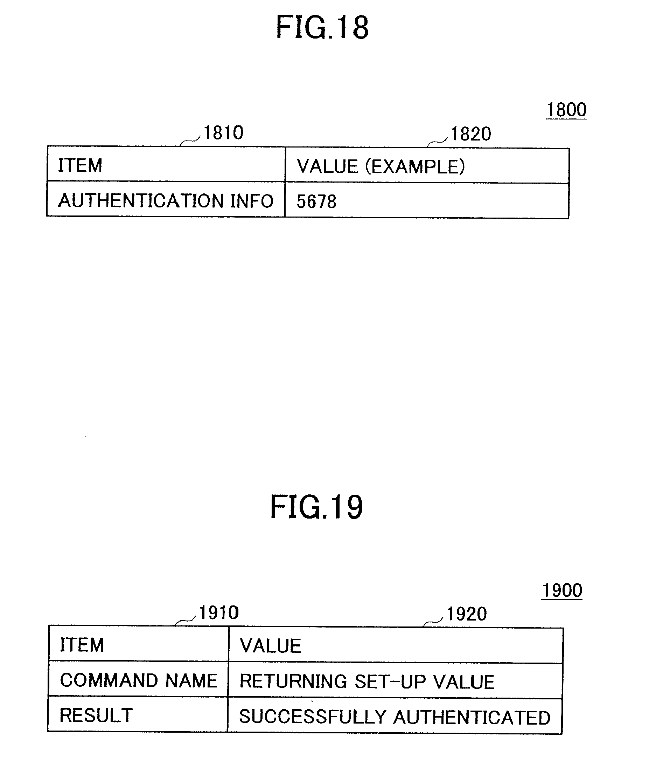

The data processing and control unit 246 requests for carrier authentication information (password, for example) required for the authentication of the SSBS 210 from the SSBS authentication unit 241 (step S52). The SSBS authentication unit 241 sends the requested carrier authentication information back to the data processing and control unit 246. An example of carrier authentication information is illustrated in Fig. 18. The authentication information 1800 illustrated in Fig. 18 includes item field 1810 and value field 1820, including authentication information and its value, respectively.

The data processing & control unit 246 transmits the set-up value computed by the set-up value computing unit 244 and the carrier authentication unit acquired from the SSBS authentication unit 241, to the data processing & control unit 222 of the user terminal 220 (step S54). An exemplary command to be transmitted is depicted in Fig. 19. The command 1900 depicted in Fig. 19 includes item field 1910 and value field 1920. The item field 1910 includes a command name and authentication result, and the value field 1920 includes "return of set-up value" and "successfully authenticated," respectively.

### 5. Operation for setting up SSBS and starting its service

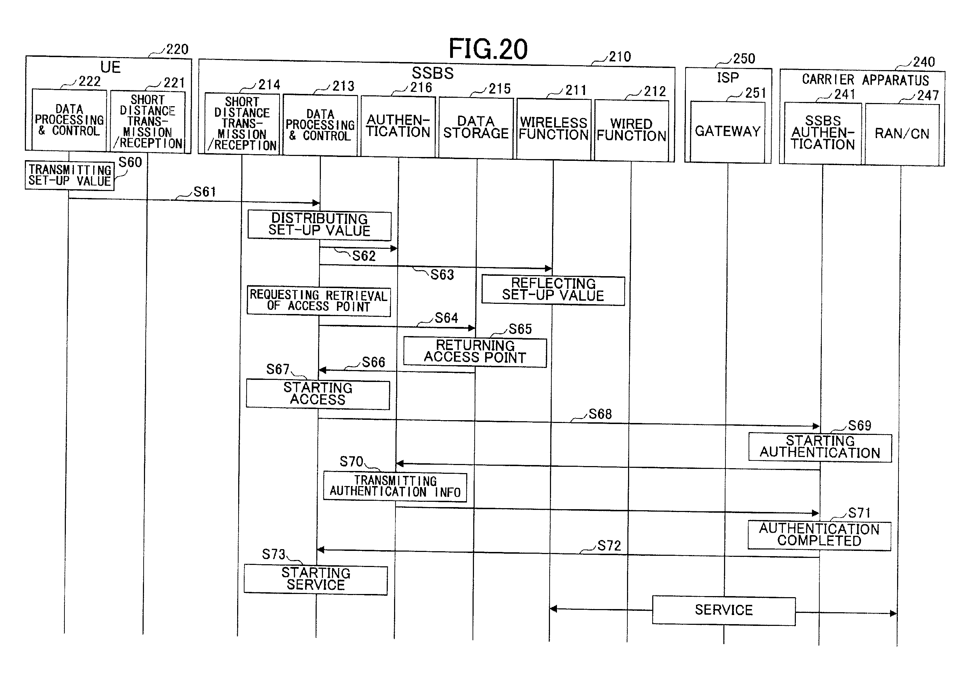

Fig. 20 depicts a sequence of operations at various components of the system 200 depicted in Fig. 2, which continues from Fig. 15.

The data processing & control unit 222 of the UT 220 receives the set-up values and carrier authentication information from the carrier apparatus 240 (step S60), and then sends those information to the data processing & control unit 213 of the SSBS 210.

In SSBS 210, the data processing & control 213 sends the carrier authentication information to an authentication unit 216 (step S62) and sends the set-up value to the wireless function unit 211 (step S63).

Then, the data processing & control unit 213 retrieves the access point information (for service) from the data storage unit 215 (steps S64-66), and starts a connection to the carrier apparatus 240 via ISP 250. More particularly, the data processing & control unit 213 uses a wired function unit 212 to connect to the SSBS authentication unit 241 of the carrier apparatus 240 via the gateway unit 251 of the ISP 250 (step S68). The authentication unit 216 of the SSBS 210 and the SSBS authentication unit 241 of the carrier apparatus 240 jointly operates to perform authentication (steps S69-71). The data processing & control unit 213 is informed of the completion of authentication (step S72).

After the completion of authentication, the wireless function unit 211 of the SSBS 210 becomes available for use, allowing the SSBS to operate as a base station for mobile phone (step S73). That means that the SSBS 210 can communicate with the user terminal 220 and the (ordinary) user terminal 260 via the wireless function unit 211.

A method of setting up a SSBS according to the embodiment has been described. Each component of the arrangement 200 depicted in Fig. 2 is described below in more details.

The SSBS 210 comprised of the wireless function unit 211, wired function unit 212, data processing & control unit 213, short distance wireless transmission/reception unit 214, data storage unit 215, and authentication unit 216. The SSBS 210 is different from the SSBS 110 described with reference to Fig. 1 at least in that the SSBS 210 includes the short distance wireless transmission/reception unit 214 and does not include the radio measurement function in the wireless function unit 211. The wireless function unit 211 is a component for wireless communicating with the UEs 210 and 260 after the completion of set-up of the SSBS 210. The wireless function unit 211 may not have the capability to measure radio waves. When in service, the wireless function unit 211 can communicate with the UEs 220 and 260 using wireless communication technique such as W-CDMA, GSM, Edge, CDMA 2000x (1xEV-DO), LTE, and WiMAX, for example. The wired function unit 212 operates as an interface unit to the ISP 250 (and the carrier apparatus 240 connected thereto). The connection with the ISP 250 is optional. The connection may be provided by means of Ethernet (trade mark) (10 Mbps, 100 Mbps, and 1000 Mbps, for example) and/or wireless LAN, for example. The data processing and control 213 controls processing of each component of the SSBS 210 during the set-up process of the SSBS. The short distance wireless transmission/reception unit 214 transmits and/or receives, to/from the short distance wireless transmission/reception unit 221 of the UE 220, various data using wireless communication technique such as RFID, Bluetooth (trademark), Infrared communication (IrDA), ZigBee (IEEE 802.15.4). The data storage unit 215 stores data written by the distributor apparatus 230. In an embodiment, the data storage unit 215 may be a nonvolatile memory such as flash memory built in the SSBS 210. In another embodiment, the data storage unit 215 may be an insertion unit (not shown) provided in the SSBS 210 to which an IC card such as a Universal Subscriber Identity Module (USIM) is inserted. The authentication unit 216 performs the authentication with the UE 220 and the carrier apparatus 240. Any suitable data such as the authentication data and the carrier authentication data necessary for the authentication may be stored in the data storage unit 215 for retrieval upon request.

The UE 220 may include the short distance wireless transmission/reception unit 221, data processing & control unit 222, user interface unit 223, authentication unit 224, GPS (Global Positioning System) unit 225, radio measurement unit 226, and wireless function unit 227. The short distance wireless transmission/reception unit 221 transmits/receives various data to/from the short distance wireless transmission/reception unit 214 of the SSBS 210. During the set-up of the SSBS 210, the data processing & control unit 222 performs data processing and control components of the SSBS 210. The user interface unit 223 provides for interface for the user (administrator) such as displaying a screen for allowing the user to input password for authentication and other information. The authentication unit 224 performs authentication with the authentication unit 216 of the SSBS 210. The authentication may be performed, for example, without limitation, by means of password and/or biometrics authentication. The GPS unit 225 acquires GPS data of the current position of the UE 220 in response to a request from the data processing & control unit 222. The radio measurement unit 226 provides for radio measurement capability which is a part of wireless functions of the UE 220. The radio measurement unit 226 acquires information on surrounding cells around the UE 220, the information including, for example, the cell numbers of base station from which the UE 220 receives radio wave and the intensity of the radio wave. The wireless function unit 227 provides for a wireless function to interface the RAN/CN unit 247 of the carrier apparatus 240 and the UE 220. The wireless function unit 227 can communicate with the carrier apparatus 240, for example, without limitation, by means of W-CDMA, GSM, Edge, CDMA 2001x (1xEV-DO), LTE, WiMAX, in a similar manner as the wireless function unit 211 of the SSBS 210.

The distributor apparatus 230 includes the data registration unit 231 and data writing unit 232. When a distributor sells the SSBS 210 to a user, the data registration unit 231 registers information on the user to the SSBS database 243 of the carrier apparatus 240. An example of the information to be registered to the SSBS database 243 may include a user name, set-up location, authentication information such as password and biometrics data. The data writing unit 232 writes data to the data storage unit 215 of the SSBS 210. An example of data to be written to the data storage unit 215 may include SSBS ID, access point information, and authentication information of the data registration unit 231.

In the carrier apparatus 240, the SSBS authentication unit 241 performs authentication of the SSBS 210 when the SSBS 210 accesses the carrier apparatus 240 via the ISP 250. The information (carrier authentication information) required for the authentication may be transmitted from the UE 220 to the SSBS 210 during the process of SSBS set-up. After the authentication, data from the SSBS 210 is transmitted to the RAN/CN unit 247. The data-for-distributor transmission/reception unit 242 can interfaces the data registration unit 231 of the distributor apparatus 230 and the SSBS database unit 243. The SSBS database unit 243 is a database that can manage information of SSBS sold by distributors. An example of data stored in the SSBS database 243 may include, for example, without limitation, user names, set-up location, authentication information (such as password and biometrics data), SSBS ID, set-up values (such as frequency, transmission power, scrambling code, and channelization code). The set-up value computing unit 244 computes the set-up value such as frequency, transmission power, scrambling code, and channelization code to be set up in the SSBS, based on the radio condition and GPS data (latitude/longitude) acquired by the UT 220. The map data unit 245 computes address information based on the GPS data (latitude/longitude) from the UE 220, the computed address information being compared with the registered address information stored in the SSBS database 243. During the set-up of the SSBS 210, the data processing & control unit 246 performs data processing and control components of the carrier apparatus 240. The RAN/CN units 247 is a group of units provided for realizing usual mobile communication. Radio Access Network (RAN) units are related to wireless communication and may configured to control handover. Core Network (CN) units are higher-level apparatuses for connecting stations in the carrier's coverage area, and may be configured to connect with other networks and manage information such as phone numbers and charges.

In ISP 250, the Gateway unit 251 is a gateway of an Internet Service Provider (ISP) that connects the SSBS 210 and the carrier apparatus 240.

The (ordinary) UE 260 is user equipment that can utilize the service of the SSBS 210. It would be appreciated that the UE 220 used for the set-up of the SSBS 210 can utilize the service of the SSBS 210.

In the embodiment described above, the GPS unit 225 and radio measurement unit 226 of the UE 220 are used for acquiring positional information and the surrounding cell information. In another embodiment, the SSBS 210 may be provided with a GPS unit and/or radio measurement unit, which allows the SSBS 210 itself to acquire the positional information and/or surrounding cell information. In this case, the SSBS 210 can transmit, to the carrier apparatus 240, the self-acquired positional information and/or surrounding cell information by means of wireless communication via the UE 220 or wired communication via the ISP 250.

The present invention is not limited to these embodiments, but various variations and modifications may be made without departing from the scope of the present invention.

## Claims

1. A base station, comprising:
a wireless function unit to wirelessly communicate with a user equipment;
a transmission/reception unit to wirelessly communicate with the user equipment; and
a control unit to receive set-up data from the user equipment via the transmission/reception unit to set up the wireless function unit.

2. The base station as claimed in claim 1, further comprising:
a data storage unit to store authentication information; and
an authentication unit to perform authentication with the user equipment via the wireless transmission/reception unit using the authentication information stored in the data storage unit.

3. The base station as claimed in claim 2, wherein the control unit receives carrier authentication information from the user equipment via the wireless transmission/reception unit to set up the carrier authentication information to the authentication unit.

4. The base station as claimed in claim 3, wherein the authentication unit performs authentication with a carrier apparatus based on the carrier authentication information,
the base station further comprising a wired function unit to wiredly communicate with the carrier apparatus after the authentication with the carrier apparatus.

5. A user equipment, comprising:
a wireless function unit to wirelessly communicate with a carrier apparatus;
a wireless transmission/reception unit to wirelessly communicate with a base station;
a control unit to transmit a set-up request of the base station to the carrier apparatus via the wireless function unit, receive set-up values and carrier authentication information for the base station from the carrier apparatus via the wireless function unit, and transmit the received set-up value and carrier authentication information to the base station via the wireless transmission/reception unit.

6. The user equipment as claimed in claim 5, further comprising a positional information acquisition unit to acquire positional information of the user equipment, wherein the control unit transmits the acquired positional information with the set-up request to the carrier apparatus, receive the set-up value based on the positional information, and transmit the received set-up value to the base station.

7. The user equipment as claimed in claim 5, further comprising a surrounding cell information acquisition unit to acquire information on surrounding cells, wherein the control unit transmits the acquired surrounding cell information with the set-up request to the carrier apparatus, receive the set-up value based on the surrounding cell information, and transmit the received set-up value to the base station.

8. The user equipment as claimed in claim 5, further comprising an authentication unit to perform authentication with the base station.

9. A method of setting up a base station, the method comprising:
transmitting by a user equipment a request for setting up a base station including identification of the base station, to a carrier apparatus;
generating by the carrier apparatus a set-up value and carrier authentication information based on the identification to transmit the generated set-up value and carrier authentication information to the user equipment; and
transmitting by the user equipment the set-up value and carrier authentication information to the base station.

10. The method as claimed in claim 9, further comprising:
storing authentication information in the base station; and
performing authentication between the bases station and the user equipment based on the stored authentication information.

11. The method as claimed in claim 9, further comprising acquiring by the user equipment positional information, wherein
in transmitting a request for setting up the base station, the user equipment transmits the request including the acquired positional information; and
in generating a set-up value and carrier authentication information, the carrier apparatus generates the set-up value and carrier authentication information based on the acquired and transmitted positional information.

12. The method as claimed in claim 11, further comprising:
registering set-up address of the base station to the carrier apparatus; and
determining by the carrier apparatus whether the acquired and transmitted positional information corresponds to the registered set-up address.

13. The method as claimed in claim 9, further comprising acquiring by the user equipment surrounding cell information, wherein
in transmitting a request for setting up the base station, the user equipment transmits the request including the acquired surrounding cell information; and
in generating a set-up value and carrier authentication information, the carrier apparatus generates the set-up value and carrier authentication information based on the acquired and transmitted surrounding cell information.

14. The method as claimed in claim 9, wherein communication between the base station and the user equipment comprises short distance communication scheme.
